# EUROPEAN PATENT SPECIFICATION

(11) **EP 0 512 623 B1**
(45) Date of publication and mention of the grant of the patent: **29.09.1999**
(21) Application number: 92201216.6
(22) Date of filing: 04.05.1992
(51) Int. Cl.: H04N 7/24, H04N 7/30, H04N 5/92

(54) **Television system for transmitting picture signals in a digital format**
Fernsehsystem zum Übertragen von Bildsignalen in einem digitalen Format
Système de télévision pour la transmission de signaux d'images en format numérique

(30) Priority: 10.05.1991 EP 91201131
(43) Date of publication of application: 11.11.1992
(73) Proprietor: Koninklijke Philips Electronics N.V., 5621 BA Eindhoven (NL)
(72) Inventor: De With, Peter Hendrik Nelis, NL-5656 AA Eindhoven (NL); Verlinden, Petrus Dominicus, NL-5656 AA Eindhoven (NL); Nijssen, Stephanus Joseph Johannes, NL-5656 AA Eindhoven (NL)
(74) Representative: Kooiman, Josephus Johannes Antonius

(56) References cited:
- WO-A-91/02430
- DE-A- 3 702 490
- IEEE TRANSACTIONS ON CONSUMER ELECTRONICS, vol.37, no.3, August 1991, NEW YORK US pages 275 - 282 YONEDA ET AL. 'AN EXPERIMENTAL DIGITAL VCR WITH NEW DCT-BASED BIT-RATE REDUCTION SYSTEM'

## Description

The invention generally relates to a television system for transmitting picture signals from a transmitter station to a receiver station through some transmission medium, in which system these picture signals are packed in a channel bit stream.

More particularly, the invention relates to a transmitter station and a receiver station for such a television system in which the original quantity of picture data is reduced in the transmitter station by means of a coding operation and the original information is regained in the receiver station by means of a decoding operation which is inverse to the coding operation.

Said transmission medium may be the atmosphere, but also a video tape or a video compact disc.

The invention also relates to a corresponding picture signal and to a video recorder device adapted to generate and store said picture signal and/or display it.

### A(2) Description of the prior art.

As is generally known, a television picture is completely defined by three picture signals PS(1), PS(2), PS(3). These may be the three primary colour signals R, G, B or, which is the same, one luminance signal Y and two colour difference signals CHR(1) and CHR(2) which are sometimes denoted U and V, sometimes by I and Q, respectively, while many other indications are in use too.

For transmitting a television picture in a digital format the television picture is considered to be a two-dimensional matrix consisting of M rows with N pixels each and only the values of the three picture signals associated with these M x N pixels are transmitted to the receiver. These values of the picture signals will be further referred to as picture signal samples and more particularly the terms luminance samples Y and colour difference samples CHR(1) and CHR(2) will hereinafter be used.

In a 625-line TV picture the visible part of each picture comprises 576 lines with 720 pixels each. If each luminance sample of such a pixel is represented by, for example an eight-bit code word, approximately 3.10⁶ bits are required for representing all luminance samples only, which means that there is a bit rate of approximately 75.10⁶ bits/sec in the case of 25 frames per second. This is inadmissibly high in practice. The object envisaged by the researchers is to realise a bit rate of approximately 20 Mbit/sec for recording digitized video signals on a magnetic tape or another storage medium.

To achieve said object, the series of television pictures is subjected to some coding operation. Many widely different coding operations are possible and in use. All of them have the property that they make the information to be transmitted available in clusters of code words, which clusters comprise very important code words which may absolutely not be lost (further referred to as first code words) and less important code words (further referred to as second code words) whose loss is less dramatic. The number of code words per cluster may differ from cluster to cluster and the number of bits may differ from code word to code word. In other words, the clusters vary in length. For good order's sake it is to be noted that the number of second code words in a cluster may be zero. A cluster of code words will hereinafter be referred to as transmission bit block.

An important class of coding operations is the transform coding (see for example Reference 1 in section C). A picture to be coded is partitioned into a plurality of sub-pictures of E by E pixels each. A usual value for E is eight so that a picture is partitioned into 6480 sub-pictures. Each sub-picture is subjected to a forward two-dimensional transform (for example, a discrete cosine transform) and converted into a coefficient block of 8 by 8 coefficients. The most important coefficient is a measure of the average luminance (or colour difference value) and is therefore referred to as dc coefficient. The other 63 coefficients which describe details of the sub-picture are referred to as ac coefficients and their importance generally decreases as the spatial frequency which they represent increases.

Such a coefficient block is further first subjected to some quantization operation and subsequently to some variable length coding. Each coefficient block is thus converted into a transmission bit block consisting of a series of serial data words.

In transform coding the picture to be coded may be the television picture itself (this is referred to as intraframe transform coding) but also a difference picture which is produced by subtracting two successive television pictures from each other or by subtracting a prediction picture from a received television picture which is derived from the transmitted difference pictures by means of a prediction circuit. Motion compensation may then be used (see Reference 7 in section C). This is referred to as interframe transform coding. The coding operation may also comprise a combination of intra and interframe transform coding, with a sub-picture being subjected to interframe transform coding if there is little motion in this sub-picture and to intraframe transform coding if there is much motion.

Another coding operation is known as "Adaptive Dynamic Range Coding" (see Reference 8 in section C). In this operation the smallest picture signal sample for each sub-picture as well as the differences between this smallest picture signal sample and the other picture signal samples after they have been subjected to some variable length coding are transmitted as one transmission bit block. The most important code word in this transmission bit block is the code word representing the smallest picture signal sample.

Without further going into detail, it is to be noted that yet another coding operation is known under the name of "Sub-band Coding".

To regain the original picture at the receiver station, the received transmission bit blocks are subjected to a decoding operation which comprises, *inter alia* a variable length decoding and with which a number of operations are performed on the received transmission bit block which are inverse to the operations performed at the transmitter station so that the original picture is obtained again.

Although a considerable bit rate reduction is realised by means of variable length coding as compared with fixed length coding, the series of data words thus obtained is however very sensitive to transmission errors. A transmission error generally involves loss of synchronization at the receiver station. This means that the separate data words are not recognized as such. The result is a seriously distorted video picture.

A solution to this problem is disclosed in International Patent Application WO 91/02430. Herein, a transmitter station for transmitting pictures in a digital form to a receiver station is disclosed, comprising encoding means for encoding said pictures into senes of transmission bit blocks of variable length each comprising most important first code words and less important second code words, and formatting means for subjecting a predetermined number of successive transmission bit blocks to a formatting operation so as to compose a channel bit block comprising the same predetermined number of sub-channel bit blocks each having a predetermined length and each beginning at a predetermined bit position in the channel bit block, the formatting means being aranged to accommodate the first code words of transmission bit blocks at the first bit positions of the respective sub-channel bit blocks and spread second code words which do not fit in the respective sub-channel bit block over remaining bit positions of other sub-channel bit blocks. Thus, the transmission blocks are completely accommodated in a respective channel block if they fit therein. In as far as a transmission block is too large to fit in the channel block, its "overflow" is accommodated in empty positions of other channel blocks.

In the case of loss of synchronization at the receiver station due to bit errors which have occurred during the transmission, at least the most important first code words can be regained faultlessly so that, for example, in transform coding at least the dc coefficient can be regenerated for each sub-picture. The result is that at least the average luminance and/or colour of each sub-picture can be displayed faultlessly.

### B. Object and summary of the invention.

It is an object of the invention to further improve the prior art transmitter.

To this end, the transmitter station in accordance with the invention is defined by the features of claim 1. A corresponding method is defined by claim 6, and a corresponding receiver station is defined by claim 7. A picture signal in accordance with the invention is defined in claim 8.

With the invention is achieved that channel blocks always have space available for accommodating second code words. Accordingly, the second code words are more evemnly spread over the channel. Moreover, as the main blocks are shorter than channel blocks, the first code words can more economically be protected against transmission errors by error protection schemes.

It is to be noted that the data words which correspond to the dc coefficients may have a predetermined fixed length and, if desired, may comprise error correcting bits. The same may apply to the data words which correspond to a number of the selected non-zero ac coefficients.

To be able to regain the original video picture at the receiver station, it is adapted according to the invention to perform a deformatting operation on the received channel bit block which is inverse to said formatting operation so that this channel bit block is converted into the onginal transmission bit blocks.

### C. References.

1. An experimental digital VCR with 40 mm Drum, Single Actuator and DCT-Based Bit-Rate Reduction.
   S.M.C. Borgers, W.A.L. Heijnemans, E. de Niet, P.H.N. de With;
   IEEE Transactions on Consumer Electronics, Vol. 34, No. 3, August 1988; pp. 697-705.
2. Verfahren zur digitalen Nachrichteniibertragung.
   H.W. Keesen, G. Oberjatzas, H. Peters;
   European patent application no. 0,197,527.
3. Television Transmission System with Differential Encoding of Transform Coefficients.
   P.H.N. de With;
   European patent application no. 0,341,780.
4. One-dimensional linear picture transformer.
   R. Woudsma, D.C.H. Chong, B.T. McSweeny, S.M. Borgers, E.A.P. Habraken;
   European patent application no. 0,286,184.
5. Adaptive Coding of Monochrome and Color Images.
   W.H. Chen, C.H. Smith;
   IEEE Transactions on Communications, Vol. COM-25, No. 11, November 1977, pp. 1285-1292.
6. Verfahren und Schaltungsanordnung zur Bitratenreduktion.
   P. Vogel;
   European patent application no. 0,260,748.
7. Efficient coding of side information in a low bit rate hybrid image coder.
   H. Schiller, B.B. Chandhuri;
   Signal Processing Vol. 19, No. 1, January 1990.
8. High efficiency coding apparatus.
   T. Kondo;
   European patent application no. 0,225,181.

### D. Explanation of the invention.

### D(1) Brief description of the Figures.

Fig. 1 shows diagrammatically a transmitter and receiver station according to the invention which jointly constitute a video recorder.

Fig. 2 shows in greater detail a coding station for use in the transmitter station of Fig. 1.

Figs. 3, 4, 5, 6, 7, 8 and 9 show diagrams to explain the operation of the coding station of Fig. 2.

Fig. 10 shows in greater detail a decoding station for use in the receiver station of Fig. 1.

Figs. 11, 12 and 13 show diagrams to explain the operation of the decoding station of Fig. 10.

### D(2) General structure of a television system.

The invention will be described with reference to a video recorder which receives the previously mentioned three picture signals PS(1), PS(2) and PS(3) from a picture signal source. In view of the fact that all of these three signals should be subjected to the same operations, only one of the three picture signals will be considered in this description, *viz*. the picture signal PS(1) which represents, for example the luminance signal Y.

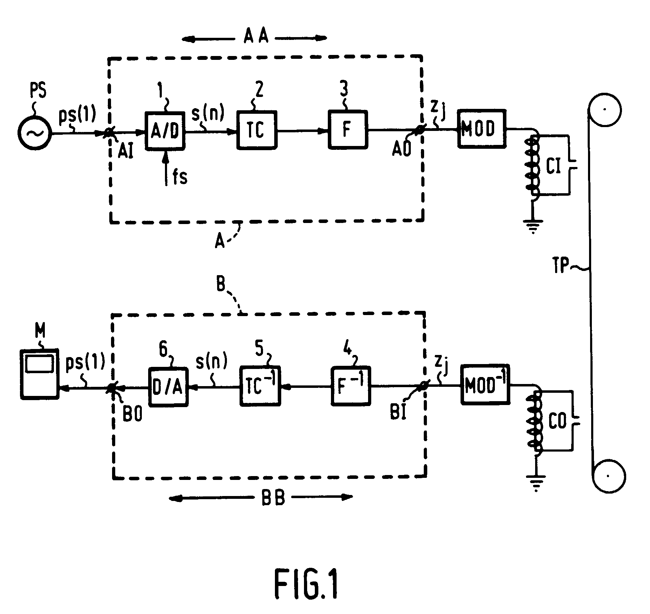

The video recorder diagrammatically shown in Fig. 1 comprises a transmitter station AA and a receiver station BB. The transmitter station AA has a coding/formatting station A with an input AI for receiving the analog picture signal PS(1) which is supplied by the picture signal source PS, for example a video camera. The output AO of this station A supplies a serial channel bit stream zⱼ which is applied *via* a modulation circuit MOD to a write head CI by means of which this channel bit stream can be recorded on a magnetic tape TP. To regain the original picture signal, a read head CO is present in the receiver station BB, which head converts the information on the magnetic tape TP into an electric signal which, after demodulation in a demodulation circuit MOD⁻¹, yields the channel bit stream zⱼ again which is applied to the input BI of a decoding/deformatting station B. The output BO of this station supplies an analog picture signal PS(1) which is applied to a monitor M.

In the station A the analog picture signal PS(1) is sampled in an A/D converter 1 at a suitable sampling frequency fₛ of, for example 13.5 MHz and the picture signal samples obtained are coded into, for example 8-bit PCM words s(n). These picture signal samples are subsequently subjected to a coding operation and for this purpose they are applied to a transform coding circuit 2. In the first place, this circuit is adapted to perform a forward two-dimensional transform, for example a Discrete Cosine Transform (DCT). Generally, a television picture is partitioned into sub-pictures of E by E pixels each and the associated picture signal samples of each sub-picture are transformed into a block of E by E coefficients. The coefficients of such a block will be denoted by y_{i,k} in which i;k = 0, 1, 2, ... E-1. The coefficient y_{0,0} represents the dc coefficient and is a measure of the average luminance of the sub-picture. The other coefficients y_{i,k} with i,k ≠ 0 are the ac coefficients. A typical value of E is eight.

In the second place, such a coefficient block of E² (= 64) coefficients is subjected to a coding operation and thus converted into a transmission bit block comprising a series of bit-serial data words. The number of data words in a series may be different from coefficient block to coefficient block. Since the coding operation comprises *inter alia* a variable length coding, the number of bits per data word will also be different for different data words.

Before transmitting the series of transmission bit blocks thus obtained, it is subjected to a formatting operation in a formatting circuit 3 which supplies the serial channel bit stream zⱼ.

In the station B the serial channel bit stream zⱼ supplied by the demodulator circuit MOD⁻¹ is applied to a deformatting circuit 4 which again supplies the series of transmission bit blocks and supplies them to a transform decoding circuit 5. On the one hand this circuit is adapted to perform a decoding operation which is inverse to said coding operation so that received data words are converted into a coefficient block y_{i,k}. On the other hand this transform decoding circuit 5 is adapted to perform an inverse two-dimensional transform so that coefficient block y_{i,k} is converted into the series of picture signal samples s(n). This series is converted by a D/A converter 6 into the original analog picture signal PS(1) which can be displayed on the monitor M.

### D(3) The coding/formatting station.

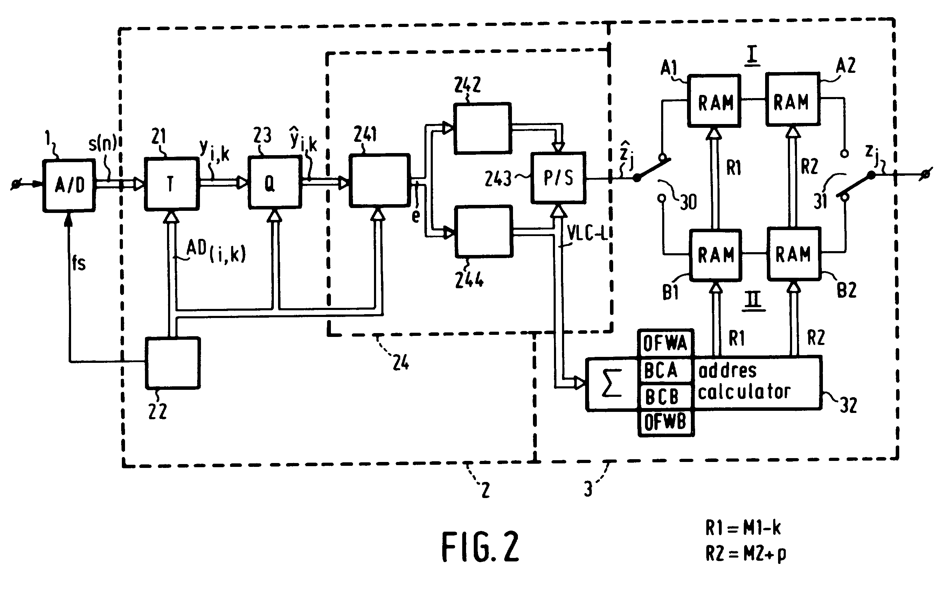

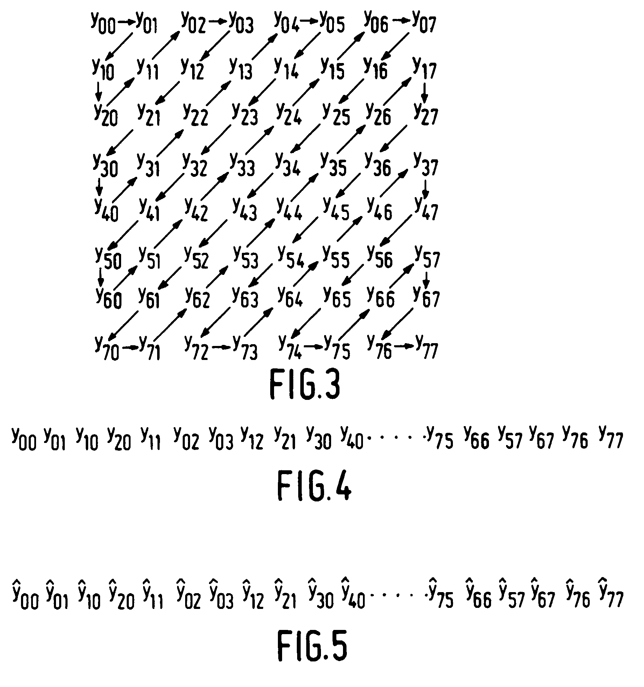

A more detailed embodiment of the coding/formatting station H is shown in Fig. 2. In addition to the A/D converter 1 it comprises a transform circuit 21 which is adapted to subject sub-pictures of 8 x 8 pixels to a two-dimensional transform, for example, a discrete cosine transform. There are numerous descriptions in literature of embodiments of such a transform circuit, see for example Reference 4, so that in this context it will be sufficient to remark that this transform circuit supplies the coefficient block y_{i,k} shown in Fig. 3 for each sub-picture of 8 x 8 pixels. These coefficients are successively applied to its output, with the dc coefficient y_{0,0} in the lead. The sequence is denoted by means of arrows in Fig. 3 and is determined by a control circuit 22 which generates address words AD(i,k) for this purpose and applies them to the transform circuit 21. The series of coefficients thus obtained (shown in Fig. 4) is further applied to a quantization circuit 23. This circuit subjects the received coefficients y_{i,k} to some quantization operations so that the quantized coefficients ŷ_{i,k} shown in Fig. 5 are obtained, all of which have the same word length. In this embodiment it has been assumed that the quantization is dependent on the location of the coefficient in the coefficient block. To this end the quantization circuit 23 not only receives the coefficients but also the associated address words AD(i,k). Since many ac coefficients are small, many quantized coefficients ŷ_{i,k} will have the value of zero. In this connection it is common practice to refer to them as zero coefficients and non-zero coefficients.

In the embodiment shown the coefficients ŷ_{i,k} are subsequently applied to a variable length coding (VLC) circuit 24 which subjects each coefficient block of 64 quantized coefficients ŷ_{i,k} to some variable length coding strategy and converts them into a series of data words in a bit-serial format, hereinafter referred to as transmission bit block, so that the transmission bit series ẑⱼ is obtained at the output of this VLC coding circuit 24.

Different variable length coding strategies are applicable in this case. For example, the strategy (further referred to as VLC strategy) in which a data word is defined for each possible value which a coefficient ŷ_{i,k} may assume. The number of bits in this data word is dependent on the probability of a coefficient of this value occurring. Another strategy (further referred to as VLC-RL strategy) is that its non-zero coefficients are subjected to the above-mentioned VLC strategy and that series of successive zero coefficients are subjected to the well-known run length coding. As is known, a length-variable data word is defined for each length which a run may assume, which data word indicates the number of zero coefficients of the run and which has a number of bits which is dependent on the probability of a run of this length occurring. However, the strategy (further referred to as PKI strategy) described in Reference 6 and implemented in Fig. 2 is recommended more and more frequently. In this strategy the series of coefficients shown in Fig. 5 is divided into events in an auxiliary coding circuit 241. An event may comprise the dc coefficient or a non-zero ac coefficient together with the series of immediately succeeding or preceding zero coefficients. The number of zero coefficients in such a series may have the value of zero. The auxiliary coding circuit 241 supplies for each event an event word e which unambiguously characterizes an event, *i.e.* the amplitude of the coefficient and the number of immediately preceding or succeeding zero coefficients. For each possible event word a data word unambiguously characterizing the relevant event and whose number of significant bits is dependent on the probability of the relevant event occurring is stored in a VLC amplitude memory 242. These data words are read from this memory 242 as soon as the relevant event word e is applied to it as an address.

It is to be noted that it may be advantageous not to subject certain coefficients such as, for example, the dc coefficients to a variable length coding but to a fixed length coding. To distinguish these coefficients from the others, the auxiliary coding circuit also receives the address words AD(i,k) in this embodiment.

It will be evident from the foregoing that in the VLC-RL strategy and the PKI strategy the number of data words generated for each sub-picture will be considerably smaller than the number of coefficients obtained by transforming this sub-picture.

To be able to distinguish the one transmission bit block from the other, a block separation parameter is generated in some way or other for each sub-picture, with the aid of which parameter it can be ascertained at the receiver station which code words jointly form one transmission bit block. This block separation parameter may indicate, for example, the number of code words or the number of bits comprised in the transmission bit block, but it may alternatively be the last code word of a transmission bit block, generally known as End of Block and referred to as EOB.

In the embodiment of Fig. 2 it has been assumed that this block separation parameter is formed by an EOB. This is supplied by VLC amplitude memory 242 in response to an event word LEW (Last Event Word) which is supplied by the auxiliary coding circuit 241 as soon as it receives the address word AD(77) from control circuit 22, which address word indicates the last coefficient of the coefficient block and which indicates that no event words are to be expected for the relevant coefficient block.

In the embodiment shown it has been assumed that the data words at the output of the VLC amplitude memory 242 occur in a bit-parallel format. However, for transmission they should be converted into a bit-serial format and therefore they are applied to a parallel-series converter 243. This converter also receives a VLC length word (VLC-L) for each data word which is supplied by VLC amplitude memory 242, which length word indicates the number of significant bits comprised in the relevant data word. Only these significant bits are applied to the output of the parallel-series converter 243 so that the transmission bit stream ẑⱼ is obtained.

The VLC length words VLC-L are supplied by a VLC length memory 244 which is also addressed by the event words e and which comprises a VLC length word for each event word.

The series of bit-serial data words thus obtained, as well as the VLC length words which are supplied by memory 244, are applied to the formatting circuit 3 where they are subjected to a formatting operation. The formatting circuit 3 comprises two parallel formatting channels I and II each having a first and a second work mode which are alternately activated. In the Figure this alternating activation is symbolized by the two switches 30 and 31. Each formatting channel comprises a series circuit of two memories, *vi*z. A1 and A2 and B1 and B2, respectively, all of which may be in the form of, for example a random access memory (RAM). These memories are addressed by a processor 32 which receives the VLC length words VLC-L from memory 244 for this purpose.

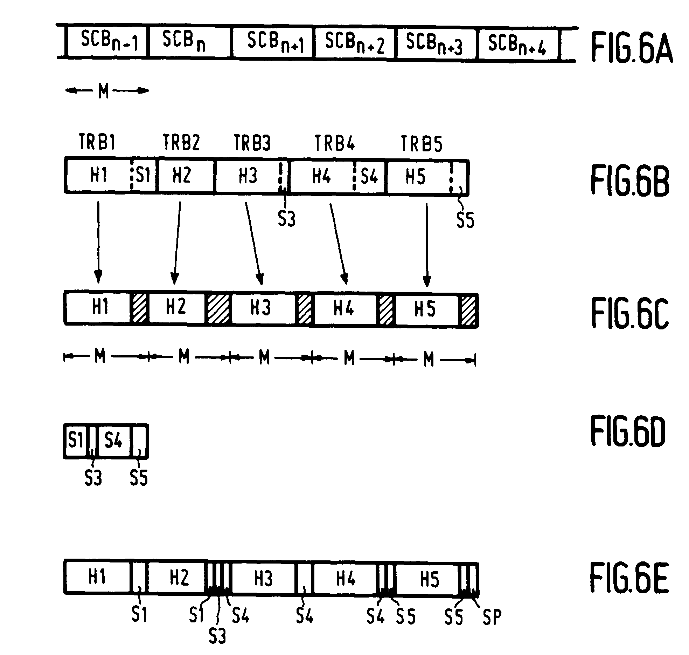

This formatting circuit supplies the channel bit stream zⱼ and each time converts a group of N successive transmission bit blocks (hereinafter referred to as super-transmission bit block) into a channel bit block comprising N sub-channel bit blocks SCBₙ with M bit positions each (see Fig. 6A). The operation of the formatting circuit will be explained with reference to Figs. 6B to 6E. Fig. 6B diagrammatically shows a super-transmission bit block comprising N = 5 transmission bit blocks TRB1, ..., TRB5 of different length with, for example 110, 70, 90, 120 and 100 bits, respectively. The formatting circuit now accommodates these five transmission bit blocks in the five sub-channel bit blocks. To this end each transmission bit block TRBₙ is first divided into a main block Hₙ and an auxiliary block Sₙ, as is also shown in Fig. 6B. Different divisions are possible, but without being complete three examples will be described in greater detail. In a first example the main block comprises all bits of a fixed number of selected code words. If these code words are length-variable, this means that the main block will also be variable in length. The selected code words will be at least those which are considered to be important. In a second example the main block comprises the first Q bits of the transmission bit block, but if it comprises fewer bits than these Q bits, it comprises all bits of the transmission bit block. In a third example the main block comprises a variable number of complete code words, which number is chosen to be such that a number of bits which is approximately equal to a predetermined number corresponds thereto. As a further criterion this number of bits should be at least equal to this predetermined number. Another criterion is of course that this number of bits is at most equal to this predetermined number or is within a predetermined range. For example, let it be assumed that a transmission bit block comprises 110 bits spread over nine code words of 12 12 10 9 15 14 18 13 7 bits, respectively, with the first three code words being the most important. Let it be assumed that a main block must comprise at least 50 bits, the main block will comprise the first five code words and hence 58 bits in this case. However, if in a further criterion the main block should comprise substantially but not more than 50 bits, the main block would comprise the first four code words and hence 43 bits.

In accordance with the second example it will hereinafter be assumed that a main block comprises the first Q bits of the transmission bit block. In a practical embodiment M is chosen to be 100 and Q is chosen to be 80.

Successive main bit blocks are now accommodated in successive sub-channel bit blocks as is shown in Fig. 6C. The shaded areas represent the bit positions which are still free. The remaining auxiliary blocks Sₙ can now be further considered to be an auxiliary series (see Fig. 6D) and their successive bits are subsequently accommodated at the successive bit positions which are still free. This results in the channel bit block shown in Fig. 6E. As may be apparent therefrom, the first 20 of the thirty bits of S1 are accommodated at the twenty bit positions which are still free and which immediately succeed H1. The first ten of the thirty free bit positions between H2 and H3 are occupied by the ten remaining bits of S1, the next ten by the ten bits of auxiliary block S3, the subsequent ten by the first ten bits of S4, and so forth.

It is to be noted that N = 5 has been chosen as an example in this case. The number of transmission bit blocks in a super-transmission bit block may, however, also be chosen to be equal to the number of sub-pictures in a complete picture, *viz*. 6480. In practice, however, a number of 30 appears to be more attractive. The use of channel blocks has the advantage that, if an incorrigible transmission error still occurs, its influence is limited to 30 sub-pictures only.

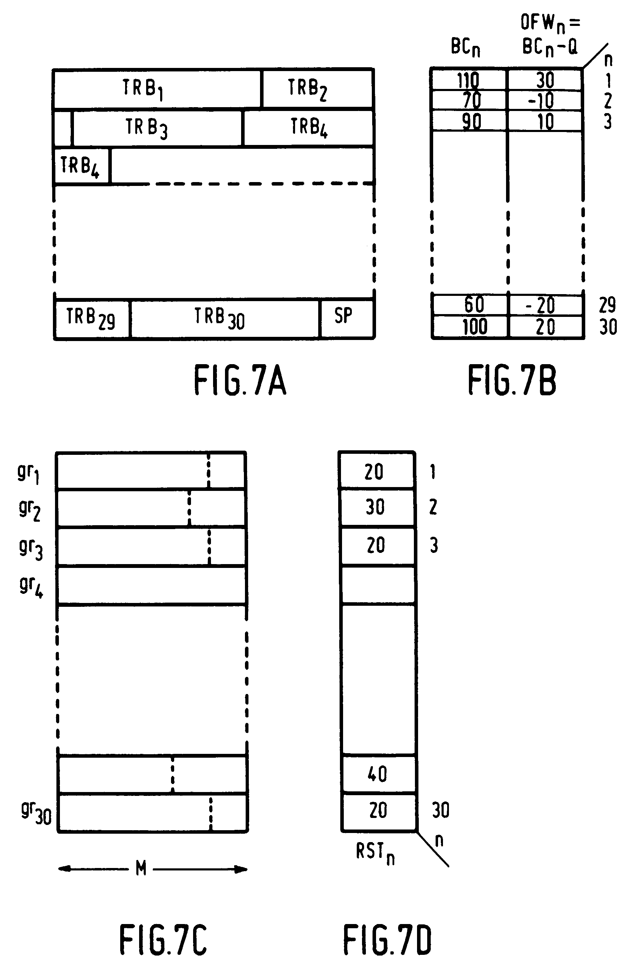

In the embodiment shown in Fig. 2 the 30 transmission bit blocks of a super-transmission bit block are written bit by bit into, for example the memory A1. After reading these thirty transmission bit blocks memory A1 will have the contents shown, for example, in Fig. 7A. In this Figure SP denotes free memory locations. While the successive transmission bit blocks are written bit by bit into the memory A1, processor 32 receives the associated VLC length word for each code word. These length words are accumulated for each transmission bit block so that a number is obtained which indicates how many bits are comprised in a transmission bit block. This number is referred to as "bitcost". The bitcost for the bit block TRBₙ will be denoted by BCₙ. In Fig. 7B the associated bitcost is shown for a number of the transmission bit blocks written into memory A1. These bitcosts are stored in memory locations of a memory BCA which forms part of processor 32. For the transmission bit blocks written into memory B1 the corresponding bitcosts are stored in the memory locations of a memory BCB which also forms part of processor 32.

In this embodiment processor 32 has a second set of memories OFWA and OFWB. In each memory location thereof a number OFWₙ is stored which indicates the difference between the bitcost BCₙ and the previously mentioned fixed number Q for a transmission bit block TRBₙ. This difference will be referred to as "overflow". For some transmission bit blocks the relevant overflow is also shown in Fig. 7B.

After all bits of thirty successive transmission bit blocks are thus written into memory A1, the associated bitcosts are written into memory BCA and the overflows are written into memory OFWA, the bits of the thirty subsequent transmission bit blocks are written one by one into memory B1, the associated bitcosts are written into memory BCB and the overflows are written into memory OFWB. Simultaneously bits in memory A1 are copied to memory A2. For better understanding it is assumed that the memory A2 comprises 30 memory rows of M bits each. This is shown in Fig. 7C in which the successive memory rows are denoted by gr₁ to gr₃₀. This copying process is realised by processor 32. More particularly the first Q bits (if present) of each transmission bit block TRBₙ are first copied to memory row grₙ. However, if TRBₙ comprises fewer than these Q bits, only these are copied to memory row grₙ. Subsequently the remaining bits are copied to the free memory locations in the different memory rows. For the embodiment shown in Fig. 7 this copying process has the result that in a first process phase of transmission bit block TRB₁ the first 80 bits are copied to memory row gr₁, the 70 bits of TRB₂ are copied to memory row gr₂, and so forth. After completion of this first process phase memory row gr₁ still has 20 free memory locations, memory row gr₂ has 30, and so forth. Fig. 7C shows the degree of filling of the different memory rows at the end of this first process phase by means of a broken line. In a second process phase the 30 bits to be copied of transmission bit block TRB₁ are spread over the memory rows gr₁ and gr₂. The first 20 bits of the remaining 30 bits of transmission bit block TRB₁ are copied to the 20 free memory locations in memory row gr₁, the other 10 bits are copied to the first 10 of the 30 free memory locations in memory row gr₂, and so forth. If all bits in memory A1 (Fig. 7A) are copied to memory A2 (Fig. 7C) in this way, the memory rows of memory A2 are read consecutively. First the M = 100 bits of memory row gr₁ are read consecutively, then the M = 100 bits of memory row gr₂, and so forth.

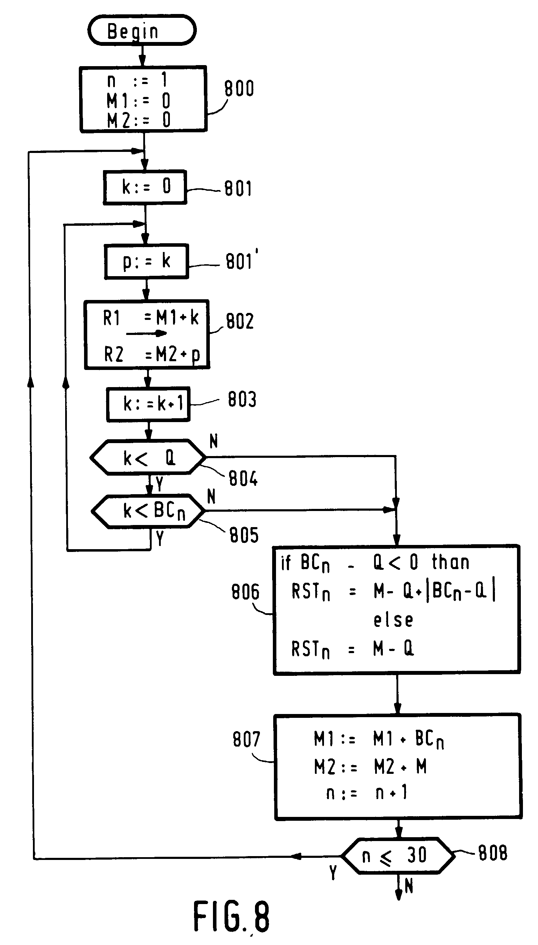

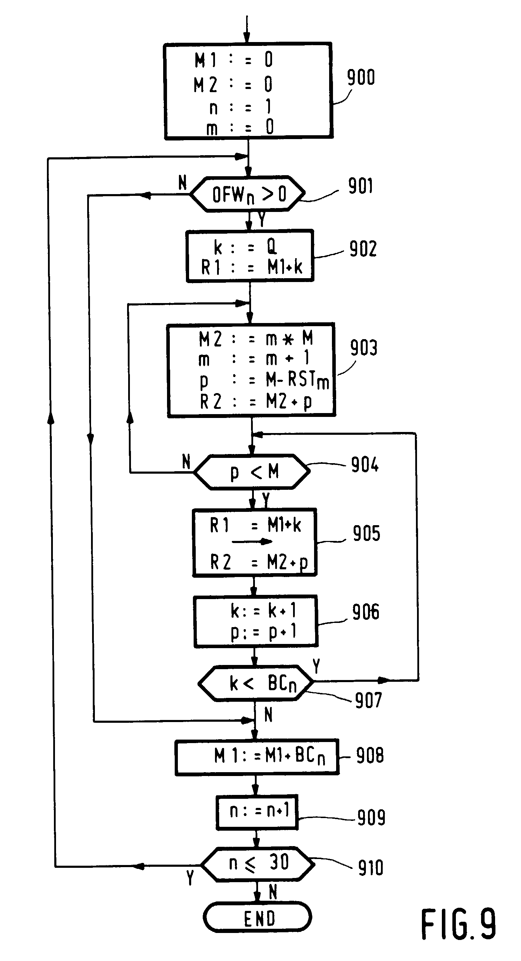

This copying process is shown as a flow chart in Figs. 8 and 9. More particularly Fig. 8 shows said first process phase and Fig. 9 shows the second process phase of this copying process. It has been assumed that the address R1 and R2 of a memory location in memory A1, B1 and A2, B2 is determined by the mathematical sum of a main address M1, M2 and a first auxiliary address k and a second auxiliary address p, respectively.

As is shown in Fig. 8, the first process phase of the copying process starts with an initiation step 800. In this step an internal counter of processor 32 whose count n represents the ordinal number of a transmission bit block TRBₙ is reset to one. This counter will hereinafter be referred to as transmission block counter. The main addresses M1 and M2 are also reset to zero and in a step 801 the auxiliary address k is reset to zero and in a step 801' the auxiliary address p is made equal to k. In other words, processor 32 now addresses the first memory location of memory A1 as well as of memory A2. In step 802 the bit in memory location R1 = M1+k of memory A1 is subsequently copied to memory location R2 = M2+k of memory A2. In step 803 the auxiliary address k is subsequently raised by one, in step 804 it is subsequently checked whether this auxiliary address has reached the value Q (= 80). If not, it is checked in step 805 whether this auxiliary address may have reached a value which is equal to the number of bits in the transmission bit block TRBₙ, *(i.e.* the bitcost BCₙ of TRBₙ). If this is not the case either, there are still bits of transmission bit block TRBₙ which can be copied to memory row grₙ and the steps 801', 802-805 are therefore performed again.

If it should appear in step 805 that all bits of transmission bit block TRBₙ are copied to memory row gr₁, or if it should appear in step 804 that the first Q bits of transmission bit block TRBₙ are copied to memory row grₙ, it is computed in a step 806 how many free memory locations are still available in memory row grₙ. This number will be referred to as rest locations and will be denoted by RSTₙ. For its computation use is made of the previously computed overflow data (see Fig. 7B). This number of rest locations for each memory row grₙ is shown in Fig. 7D and these data are stored in a further internal memory of processor 32. In a step 807 the main address M1 is subsequently set to a value which corresponds to the first bit of the next transmission bit block TRBₙ₊₁ and the main address M2 is set to a value which corresponds to the first bit of the next memory row grₙ₊₁. Subsequently the count n of transmission block counter is raised by one. If it appears in step 808 that not all thirty transmission bit blocks have been processed in the manner described above, the steps 801-808 are performed again. When by means of this first process phase the first Q (= 80) or, where appropriate, all BCₙ bits of the corresponding transmission bit blocks TRBₙ are copied in each one of the memory rows grₙ, the second process phase is performed. This is shown in Fig. 9 and comprises an initiation step 900 in which the two main addresses M1 and M2 are reset to zero. The count n of the transmission block counter is reset to one and a further internal counter of processor 32 whose count m represents the ordinal number of a memory row is reset to zero. This counter will hereinafter be referred to as memory row counter.

In step 901 it is subsequently checked whether the overflow of the actual transmission bit block TRBₙ is positive, *i.e.* whether it comprises more than Q (= 80) bits. If this is the case, the auxiliary address k is set to the value Q (= 80) in step 902 so that the address R1 for memory A1 becomes equal to Q. In a step 903 the address R2 = M2+p is now determined. To this end the main address M2 is set to a value m∗M, which in the first instance is equal to zero. Subsequently the count of the memory row counter is raised by one and the second auxiliary address p is set to the value M-RSTₘ. Since this second auxiliary address may not exceed the value M (= 100), this auxiliary address is compared with M in step 904. If it appears that p has indeed become larger than M, step 903 is performed once again so that the main address M2 is set to the start of the next memory row grₘ₊₁ and the address R2 is set to the first free memory location in this memory row grₘ₊₁.

If the second auxiliary address p has a value which is smaller than M (= 100) the bit at address R1 (for example, 81) in memory A1 is copied to address R2 (for example, also 81) in memory A2 (step 905). Subsequently, the first auxiliary address k and the second auxiliary address p are raised by one in step 906. If it appears in step 907 that the first auxiliary address k is still smaller than the number of bits in the relevant transmission bit block, bits thereof are still to be copied to memory A2 and therefore the steps 904-907 are performed again. It will then happen (step 904) that a new bit to be copied is copied to the first free memory location of the next memory row. As soon as it is apparent that the relevant transmission bit block no longer comprises any bits which are still to be copied, the main address M1 is set to the start of the next transmission bit block TRBₙ₊₁ in step 908. Moreover, the count of transmission block counter is raised by one in step 909 and thus adapted to the ordinal number of this subsequent transmission bit block. Finally it is checked in step 910 whether this count does not reach a value (30) which exceeds the number of transmission bit blocks in a super-transmission bit block. If this count indeed still does not exceed 30, the steps 901-910 are performed again. If the count n has exceeded 30, this second process phase has come to an end and a new super-transmission bit block can be copied from the one to the other memory.

It is to be noted that it is checked in step 901 whether transmission bit block TRBₙ comprises further bits to be copied in addition to the bits already copied. If this is not the case, because the total number of bits in TRBₙ is smaller than the fixed number of Q (= 80), the main address M1 is set to the start of the next transmission bit block (step 908), and if this block is still present within the super-transmission bit block (steps 909 and 910) its non-copied bits are copied as yet by performing steps 901-907 again.

### D(4) The decoding/deformatting station.

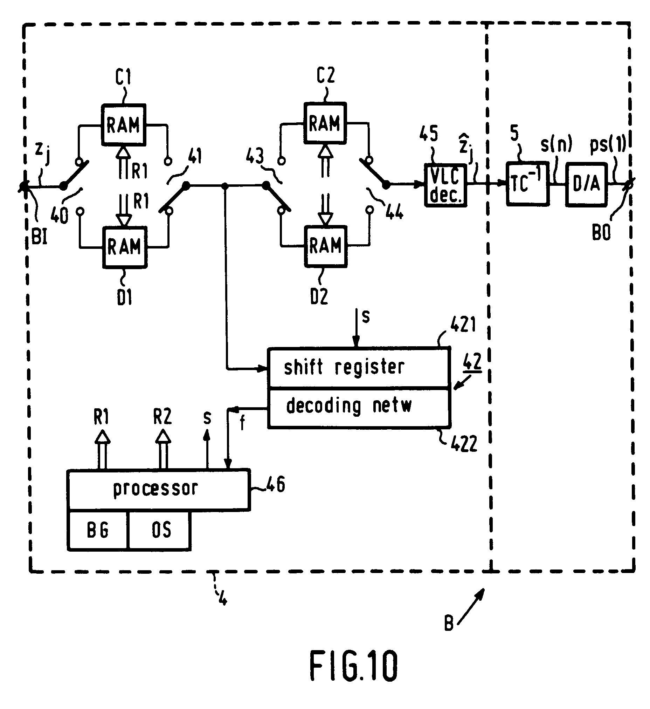

A more detailed embodiment of the decoding station adapted to cooperate with the coding/formatting station of Fig. 2 is shown in Fig. 10. It has an input BI which receives the bit steam zⱼ from the station A and applies it to the deformatting circuit 4. Successive channel blocks in this bit stream are alternately written into a first memory C1 and a second memory D1. If something is written into one of these memories, the contents of the other memory are copied to a memory C2 and D2, respectively. This alternating use of these two memories is symbolized in the Figure by means of the two switches 40 and 41. For the sake of simplicity it will be assumed that each memory C1 and D1 and the memories A2 and B2 in the formatting circuit 3 are divided into thirty rows gr₁ ... gr₃₀ of M bits each (see Fig. 11A). For addressing memory locations the memories C1 and C2 or D1 and D2 receive the addresses R1 and R2, respectively. The address R1 is equal to the mathematical sum of a main address MR1 and an auxiliary address k, while address R2 is equal to the mathematical sum of a main address MR2 and an auxiliary address m. The bits read from a memory C1 or D1 are applied to an EOB detector 42 which detects the presence of an EOB code word in the serial bit stream applied to it.

To this end this EOB detector 42 comprises a shift register 421 which receives a shift pulse S whenever memory C1 or D1 receives a new address R1. A decoding network 422 supplying a logic signal f is coupled to this shift register. This signal has the value "1" whenever the shift register comprises an EOB code word and the value "0" if it does not comprise this EOB code word. The bits stored in the memory C1 or D1 are copied bit block by bit block to the memory C2 or D2, respectively. These memories C2 and D2 receive addresses R2 for this purpose. If bits are copied to the one memory, for example D2, bits are read from the other memory C2. This alternating use of the memories C2 and D2 is symbolized in the Figure by means of the switches 43 and 44. The bits read from a memory C2 or D2 are applied to a variable length decoding circuit 45 which converts each transmission bit block into a series of 64 coefficients each having the same length. This series of coefficients jointly forms the transmission bit stream ẑⱼ. In the transform decoding circuit 5 the coefficients thus obtained are converted into the series of picture signal samples s(n) which are converted by the D/A converter into the analog picture signal PS(1).

The addresses R1, R2 and the shift pulses S are generated by a control processor 46 which also receives the logic value f from the decoding network 422.

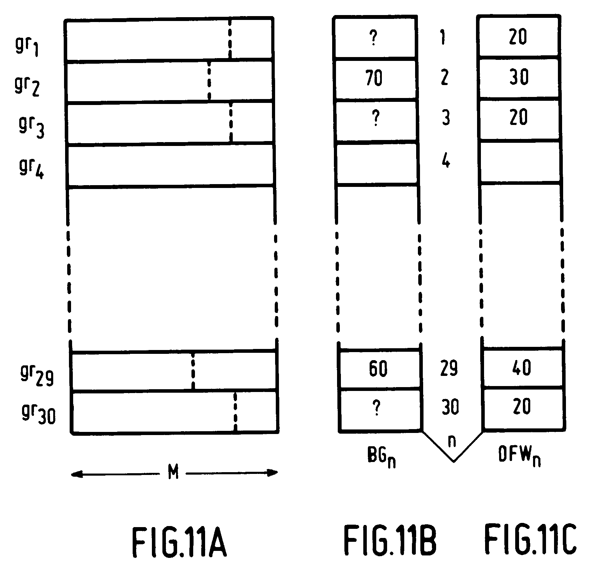

The deformatting circuit 4 converts the series of sub-channel bit blocks SCBₙ (see Fig. 6A) into the original series of transmission bit blocks (see Fig. 6B). In a first deformatting phase it is checked in which memory rows grₙ an EOB code word is present within its first Q (= 80) bits. The location of the last bit of this EOB code word in memory row grₙ is referred to as block limit BGₙ and stored in a location of a block limit memory BG which forms part of processor 46. If no EOB code word is found within the Q = 80 first bits in a memory row, a "not found flag" (?) is assigned to the relevant block limit BGₙ. In Fig. 11B the associated block limit (in numbers of bits) has been given for a number of memory rows (sub-channel bit blocks). If block limits are known in this way, all bits associated with one and the same transmission bit block are consecutively copied from memory C1 to memory C2 and from D1 to D2, respectively, in a second deformatting phase. It is to be noted that the memory locations of memories C2 and D2 are addressed in an ascending order.

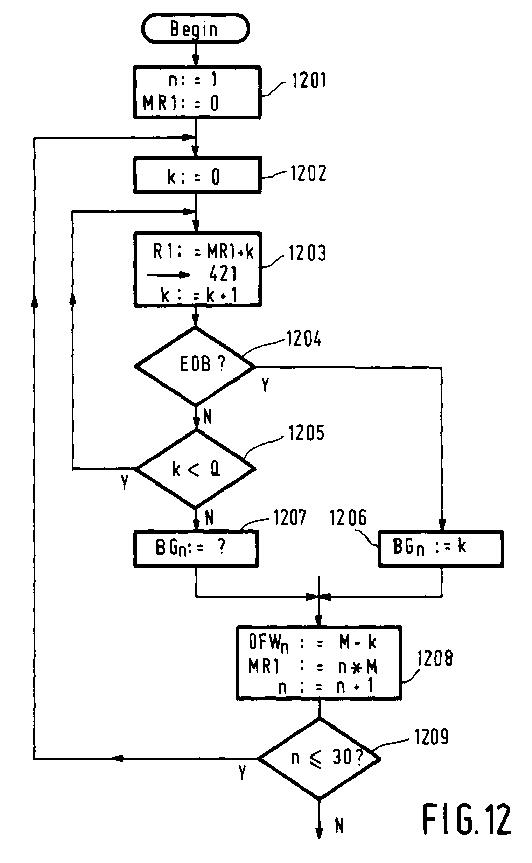

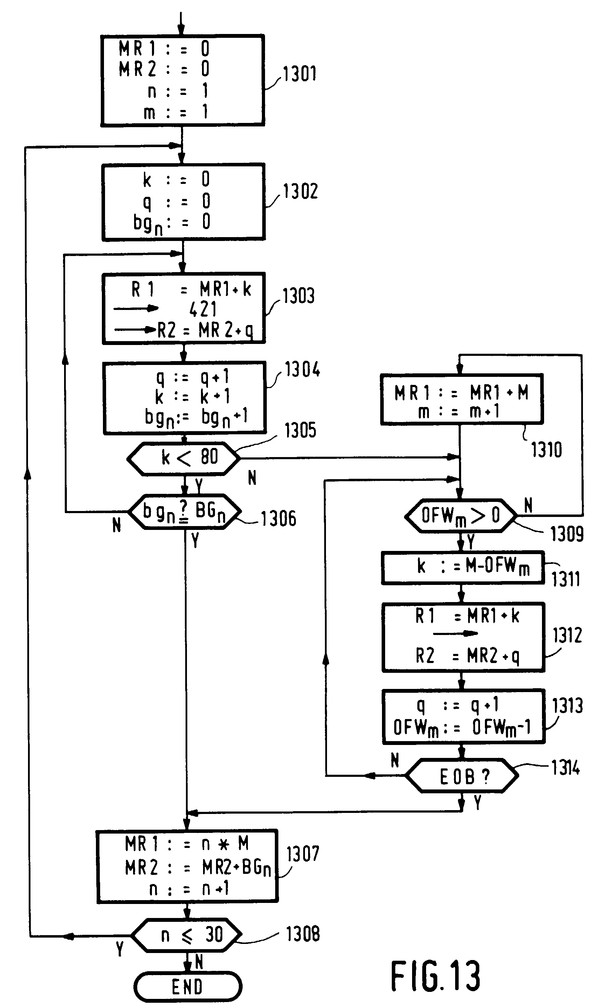

This deformatting process is shown as a flow chart in Figs. 12 and 13. More particularly, Fig. 12 shows the first deformatting phase and Fig. 13 shows the second deformatting phase.

As is shown in Fig. 12, the first deformatting phase starts with an initiation step 1201. In this step an internal counter (referred to as memory row counter) of processor 46 whose count n represents the ordinal number of the memory row grₙ (sub-channel bit block SCBₙ) is set to one. Moreover, the main address MR1 is set to zero. In step 1202 the auxiliary address k is subsequently set to zero and in step 1203 this auxiliary address k is raised by one after the bit at address R1 = MR1+k has been applied to shift register 421. In step 1204 it is further checked whether the shift register comprises the EOB code word. This means that the decoding network 422 supplies a logic "1". If this is not the case, it is checked in step 1205 whether all first Q (= 80) bits of the memory row grₙ have been addressed and applied to shift register 421. If this is not yet the case, the steps 1203-1205 are performed again. However, if an EOB code word appears to be present within the first Q bits of the memory row grₙ (step 1204), the actual value of the auxiliary address k is stored as block limit BGₙ in block limit memory BG (step 1206). However, if no EOB code word appears to be present within these first Q bits of memory row grₙ (step 1205), the "not found flag" (?) is stored at the memory location BGₙ of block limit memory BG in step 1207. If it has thus been ascertained for a memory row grₙ whether there is an EOB code word within its Q (= 80) first bits, and if so, where its last bit is present (BGₙ), the number of overflow bits OFWₙ of this memory row is determined in a step 1208 (see Fig. 11C). This number is equal to the difference between the total number of bits M (= 100) in the memory row and the location where the last bit of the EOB code word is present, or if such a code word has not been found, the difference between M (= 100) and Q (= 80). The locations of this last bit of EOB, as well as Q are represented by the last value of the auxiliary address k. In this step 1208 the memory row counter n is raised by one after the main address MR1 has been raised by M (= 100). If not all N = 30 memory rows have been processed in this manner (step 1209), the steps 1202-1208 are repeated for the next memory row grₙ₊₁.

As soon as the corresponding block limit BGₙ is known as a numerical value or as a not found flag (?) for each memory row grₙ by means of this first deformatting phase, the second deformatting phase is performed in which all bits associated with one and the same transmission bit block are copied one by one from memory C1 or D1 to memory C2 or D2, respectively. This second deformatting phase is shown in Fig. 13. It comprises an initiation step 1301 in which the memory row counter is again reset to one (n: = 1), an auxiliary address m is reset to one and the two main addresses are set to zero. In a step 1302 auxiliary address k, which will be exclusively used for addressing memory C1 or D1, as well as a further auxiliary address q, which will be exclusively used for addressing memory C2 or D2, respectively, are set to zero and a block limit variable bgₙ is also set to zero. Subsequently the bit at memory location R1 = MR1+k is applied to shift register 421 and copied to memory location R2 = MR2+q of memory C2 or D2 in step 1303. Subsequently the auxiliary addresses k and q as well as the block limit variable bgₙ are raised by one in step 1304. If it appears in step 1305 that the auxiliary address k is still smaller than Q (= 80) and if, in step 1306, the block limit variable bgₙ is still unequal to the real value of the block limit BGₙ, the steps 1303-1306 are performed again so that the next bit is copied from memory C1 or D1 to memory C2 or D2, respectively. However, if it appears that the block limit has been reached (step 1306), the processor 46 is prepared for copying bits of the next sub-channel bit block. To this end the main address MR1 is first set in a step 1307 to the first memory location of the next memory row, the main address MR2 for memory C2 or D2 is set to the next free memory location MR2+BGₙ and finally the memory row counter is raised by one to n+1. If it appears in step 1308 that not all thirty memory rows of memory C1 or D1 have been processed, the steps 1302-1308 are repeated for memory row n+1 (and hence for sub-channel bit block SCBₙ₊₁). However, if all memory rows have been processed, the second deformatting phase has come to an end.

If it is ascertained in step 1305 that all first Q(= 80) bits of memory row grₙ have been copied (to shift register 421 as well as to memory C2 or D2) and if no block limit has been reached, this means that bits of the relevant transmission bit block are accommodated in other memory locations, possibly even in other sub-channel bit blocks (memory rows). In order to ascertain in which memory locations of memory C1 or D1 the further bits of this transmission bit block can be found, a search takes place in the sequence m = 1, 2, 3 ... for that memory row grₘ which still has copiable bits at one or more of the memory locations in the range {(M-1)-OFWₘ}---(M-1). This knowledge follows from the fact that the number of overflow bits (indicated by OFWₘ) is decreased by one whenever an overflow bit has been copied. For this searching action it is therefore checked in step 1309 whether there are still overflow bits in memory row grₘ; in other words, whether OFWₘ is positive. If this is not the case (no overflow bits available any more) it is checked whether the next memory row grₘ₊₁ may still have overflow bits, and so forth (step 1310). As soon as a memory row has been found with overflow bits which are still to be copied (OFWₘ > 0), the auxiliary address k is set to a value M-OFWₘ (= 100-OFWₘ) in step 1311, which corresponds to the address of the first overflow bit still to be copied in memory row grₘ. In step 1312 this bit is indeed copied to memory location R2 of C2 or D2. In step 1313 the auxiliary address q is subsequently raised by one, OFWₘ is decreased by one, which expresses that the number of overflow bits to be copied in memory row grₘ has been reduced by one. Finally, in step 1314 it is checked whether an EOB code word is instantaneously present in the shift register 421 and if so, the process is continued with step 1307 because all bits associated with a transmission bit block have now been copied from memory C1 or D1 to memory C2 or D2, respectively. If it appears that the shift register does not comprise an EOB code word, the steps 1309-1314 are repeated.

In the embodiment described it has been assumed that the block separation parameter is formed by an EOB code word. As already noted, other block separation parameters are alternatively possible, for example, a parameter indicating how many code words or how many bits are comprised in a transmission bit block. Also when using a different block separation parameter those skilled in the art will be able to adapt the implementation of the deformatting circuit on the basis of the teachings of the extensively described deformatting circuit and without having to resort to any inventive activity. In fact, all these deformatting circuits have in common that the successive bit series in the channel bit block which jointly form an auxiliary block are displaced to and inserted immediately behind those main blocks whose length is less than that corresponding to the associated block separation parameter. This may also be considered as follows. All those bits which are not associated with a main block are taken from the channel bit block and placed one behind the other (see also Fig. 6D) so that an auxiliary bit series is obtained. Subsequently the first main block of this channel bit block is first supplemented with such a number of bits of this auxiliary bit series that this main block has grown to a block whose number of bits or code words corresponds to the block separation parameter. The second main block is supplemented with the remaining auxiliary bit series in a corresponding manner (*i.e.* the original auxiliary bit series decreased by the bits with which the first main block has been supplemented) and so forth.

In the foregoing an embodiment has been described in which the processing of only one of the three signals PS(1), PS(2) and PS(3) constituting a colour television picture is given in detail because each of these three signals is treated in the same way. In practice, these three signals are sampled separately (usually at distinct sampling frequencies) and digitized. The digital picture signals thus obtained are applied in a time-division multiplex format to the transform circuit 21 which subsequently supplies alternately coefficient blocks associated with these three picture signals in accordance with a predetermined pattern. For example, it first supplies two coefficient blocks associated with PS(1), subsequently one coefficient block associated with PS(2), then again two coefficient blocks associated with PS(1) and finally one coefficient block associated with PS(3), etc. The transmission bit stream ẑⱼ is then formed by a series of transmission bit blocks which, in conformity with said pattern, are associated with said three different picture signals. It is noted that in such situation the sub-channel bit blocks as well as the main blocks may have different lengths for different picture signals.

## Claims

1. A transmitter station for transmitting pictures in a digital form to a receiver station, comprising:
encoding means for encoding said pictures into series of transmission bit blocks of variable length each comprising most important first code words and less important second code words;
formatting means for subjecting a group of a predetermined number of successive transmission bit blocks to a formatting operation so as to compose a channel bit block comprising the same predetermined number of sub-channel bit blocks each having a predetermined length and each beginning at a predetermined bit position in the channel bit block, the formatting means being arranged to accommodate the first code words of transmission bit blocks at the first bit positions of the respective sub-channel bit blocks and spread second code words which do not fit in the respective sub-channel bit block over remaining bit positions of other sub-channel bit blocks;
characterized in that the formatting means are further arranged to:
- divide transmission bit blocks having a length larger than a predetermined length which is less than the length of the sub-channel bit block into main blocks having said predetermined length and comprising the first code words, and auxiliary blocks comprising the second code words;
- accommodate each main block at the first bit positions of the respective sub-channel bit block; and
- accomodate successive bits of the auxiliary blocks of said group at successive remaining bit positions of the channel bit block.

2. A transmitter station as claimed in Claim 1, wherein the encoding means is a two-dimensional forward transform to obtain for each transmission block one dc coefficient and a plurality of ac coefficients, characterized in that the first code words of the transmission bit block includes the dc coefficient and the largest ac coefficients.

3. A transmitter station as claimed in Claim 1, characterized in that each main block comprises all bits of the corresponding transmission bit block up to a predetermined maximum number (Q).

4. A transmitter station as claimed in Claim 1, characterized in that each main block comprises all code words of the corresponding transmission bit block up to a predetermined maximum number.

5. A transmitter station as claimed in Claim 1, characterized in that each main block comprises such a plurality of code words selected from the corresponding transmission bit block that the total number of bits of this main block is within a predetermined range.

6. A method of transmitting pictures in a digital form, comprising the steps of:
for encoding said pictures into series of transmission bit blocks of variable length each comprising most important first code words and less important second code words;
formatting a group of a predetermined number of successive transmission bit blocks into a channel bit block comprising the same predetermined number of sub-channel bit blocks each having a predetermined length and each beginning at a predetermined bit position in the channel bit block, thereby accommodating the first code words of transmission bit blocks at the first bit positions of the respective sub-channel bit blocks and spreading second code words which do not fit in the respective sub-channel bit block over remaining bit positions of other sub-channel bit blocks;
characterized in that the step of formatting further comprises the steps of:
- dividing transmission bit blocks having a length larger than a predetermined length which is less than the length of the sub-channel bit block into main blocks having said predetermined length and comprising the first code words, and auxiliary blocks comprising the second code words;
- accommodating each main block at the first bit positions of the respective sub-channel bit block; and
- accomodating successive bits of the auxiliary blocks of said group at successive remaining bit positions of the channel bit block.

7. A receiver station for receiving a picture signal encoded into series of transmission bit blocks of variable length each comprising a number of most important first code words and a number of less important second code words, comprising:
means for receiving the picture signal in the form of channel bit blocks of fixed length, each channel bit block comprising a number of sub-channel bit blocks of predetermined lengths beginning at a predetermined bit position in the channel bit block, a sub-channel bit block comprising first code words of a corresponding transmission block and second code words of other transmission blocks;
deformatting means for converting the sub-channel bit blocks of a channel-block into the corresponding transmission bit blocks;
characterized in that the deformatting means are arranged to:
- divide each sub-channel bit block into a main block having a length less than the length of said sub-channel bit block, said main block comprising the first code words of the corresponding transmission bit block, and a remaining portion;
- forming auxiliary blocks from successive bits at successive bit positions of all remaining portions of the channel bit block, said auxiliary blocks comprising the second code words of said transmission blocks; and
- inserting each auxiliary block of a transmission block immediately behind the main block of the corresponding transmission block.

8. A picture signal representing a series of transmission bit blocks of variable length each comprising a number of most important first code words and a number of less important second code words, comprising:
channel bit blocks of fixed length, each channel bit block comprising a group of a number of sub-channel bit blocks of predetermined lengths beginning at respective predetermined bit positions in the channel bit block, each sub-channel bit block comprising first code words of a corresponding transmission block and second code words of transmission blocks;
characterized in that each sub-channel bit comprises a main block having a length less than the len th of said sub-channel bit block in which the first code words of a corresponding transmission bit block are accommodated, and a remaining portion, the successive bit positions of the remaining portions of the channel bit block being filled with successive bits of the auxiliary blocks of said group.

9. A video recorder comprising a recording unit for recording a digital picture signal on a recording medium and a play back unit for playing back the recorded picture signal, characterized in that the recording unit includes a transmitter station as claimed in any one of claims 1-5 for recording the picture signal on the storage medium in the form of the channel blocks, and the play back unit includes a receiving station as claimed in claim 7 for receiving the recorded channel blocks and reproducing the picture signal.

## Patentansprüche

1. Sendestelle zum Übertragen von Bildern in einer digitalen Form zu einer Empfangsstelle, mit:
- Codiermitteln zum Codieren der genannten Bilder in reihen von Übertragungsbitblöcken veränderlicher Länge, die je wichtigste erste Codewörter und weniger wichtige zweite Codewörter aufweisen;
- Formatiermitteln um eine Gruppe einer vorbestimmten Anzahl aufeinanderfolgender Ubertragungsbitblöcke einem Formatiervorgang auszusetzen zum Bilden eines Kanalbitblocks mit derselben vorbestimmten Anzahl Subkanalbitblöcke, die je eine vorbestimmte Länge haben und je an einer vorbestimmten Bitstelle in dem kanalbitblock beginnen, wobei die Formatiermittel dazu vorgesehen sind, die ersten Codewörter der Übertragungsbitblöcke an den ersten Bitstellen der betreffenden Subkanalbitblöcke unterzubringen und zweite Codewörter, die nicht in den betreffenden Subkanalbitblock passen, über die restlichen Bitstellen der anderen Subkanalbitblöcke zu verteilen;
dadurch gekennzeichnet, dass die Formatiermittel weiterhin dazu vorgesehen sind:
- Übertragungsbitblöcke mit einer Länge, die größer ist als eine vorbestimmte Länge, die kleiner ist als die Länge des Subkanalbitblocks, in Hauptblöcke mit der genannten vorbestimmten Länge und mit den ersten Codewörtern sowie in Hilfsblöcke mit den zweiten Codewörtern zu verteilen;
- jeden Hauptblock an den ersten Bitstellen des betreffenden Subkanalbitblocks unterzubringen; und
- aufeinanderfolgende Bits der Hilfsblöcke der genannten Gruppe an aufeinanderfolgenden restlichen Bitstellen des Kanalbitblocks unterzubringen.

2. Sendestelle nach Anspruch 1, wobei die Codiermittel eine zweidimensionale Vorwärtstransformation umfassen um für jeden Übertragungsblock einen dc-Koeffizienten zu erhalten und eine Anzahl ac-Koeffizienten, dadurch gekennzeichnet, dass die ersten Codewörter des Übertragungsbitblocks die dc-Koeffizienten und die größten ac-Koeffizienten enthalten.

3. Sendestelle nach Anspruch 1, dadurch gekennzeichnet, dass jeder Hauptblock alle Bits des entsprechenden Übertragungsbitblocks bis zu der vorbestimmten maximalen Anzahl (Q) enthält.

4. Sendestelle nach Anspruch 1, dadurch gekennzeichnet, dass jeder Hauptblock alle Codewörter des entsprechenden übertragungsbitblocks bis zu einer vorbestimmten maximalen Anzahl enthält.

5. Sendestelle nach Anspruch 1, dadurch gekennzeichnet, dass jeder Hauptblock eine solche Anzahl Codewörter aufweist, selektiert aus dem entsprechenden Übertragungsbitblock, dass die gesamte Anzahl Bits dieses Hauptblocks innerhalb eines vorbestimmten Bereichs liegt.

6. Verfahren zum Übertragen von Bildern in digitaler Form, wobei dieses verfahren die nachfolgenden Verfahrensschritte umfasst:
- das Codieren der genannten Bilder in Reihen von Übeflragungsbitblöcken veränderlicher Länge, die je wichtigste erste Codewörter und weniger wichtige zweite Codewörter aufweisen;
- das Formatieren einer Gruppe einer vorbestimmten Anzahl aufeinanderfolgender Übertragungsbitblöcke in einen Kanalbitblock mit derselben vorbestimmten Anzahl Subkanalbitblöcke, die je eine vorbestimmte Länge haben und je an einer vorbestimmten Bitstelle in dem Kanalbitblock beginnen, wodurch die ersten Codewörter der Übeflragungsbitblöcke an den ersten Bitstellen der betreffenden Subkanalbitblöcke untergebracht werden und zweite Codewörter, die nicht in den betreffenden Unterkanalbitblock passen, über die restlichen Bitstellen anderer Unterkanalbitblöcke verteilt werden,
dadurch gekennzeichnet, dass der Formatierschritt weiterhin die nachfolgenden Verfahrensschritte umfasst:
- das Aufteilen von Übertragungsbitblöcken mit einer Länge, die größer ist als eine vorbestimmte Länge, die kleiner ist als die Länge des Subkanalbitblocks, in Hauptblöcke mit der genannten vorbestimmten Länge mit den ersten Codewörtern und mit Hilfsblöcken mit den zweiten Codewörtern;
- das Unterbringen jedes Hauptblocks an den ersten Bitstellen des betreffenden Subkanalbitblocks; und
- das Unterbringen aufeinanderfolgender Bits der Hilfsblöcke der genannten Gruppe an aufeinanderfolgenden restlichen Bitstellen des Kanalbitblocks.

7. Empfangsstelle zum Empfangen eines Bildsignals, das in Reihen von Übertragungsbitblöcken veränderlicher Länge codiert ist, die je eine Anzahl wichtigster erster Codewörter und eine Anzahl weniger wichtiger zweiter Codewörter aufweisen, mit:
- Mitteln zum Empfangen des Bildsignals in Form von Kanalbitblöcken einer festen Länge, wobei jeder Kanalbitblock eine Anzahl Subkanalbitblöcke einer vorbestimmten Länge aufweist, anfangend an einer vorbestimmten Bitstelle in dem Kanalbitblock, wobei ein Subkanalbitblock erste Codewörter eines entsprechenden Übertragungsblocks und zweite Codewörter der anderen Übertragungsblöcke aufweist;
- Deformatiermitteln zum Umwandeln der Subkanalbitblöcke eines Kanalblocks in die entsprechenden Übetragungsbitblöcke;
dadurch gekennzeichnet, dass die Deformatiermittel dazu vorgesehen sind:
- jeden Subkanalbitblock in einen Hauptblock mit einer Länge, die kleiner ist als die Länge des genannten Subkanalbitblocks, wobei der genannte Hauptblock die ersten Codewörter des betreffenden Übertragungsbitblocks aufweist, und in einen restlichen Teil aufzuteilen;
- aus den aufeinanderfolgenden Bits an aufeinanderfolgenden Bitstellen aller restlichen Teile des Kanalbitblocks Hilfsblöcke bilden, wobei diese Hilfsblöcke die zweiten Codewörter der genannten Übertragungsblöcke enthalten; und
- das Einfügen jedes Hilfsblocks eines Übertragungsblocks unmittelbar hinter den Hauptblock des betreffenden Übertragungsblocks.

8. Bildsignal, das eine Reihe von Übertragungsbitblöcken veränderlicher Länge darstellt, die je eine Anzahl wichtigster erster Codewörter und eine Anzahl weniger wichtiger zweiter Codewörter aufweisen, mit:
- Kanalbitblöcken fester Länge, wobei jeder Kanalbitblock eine Gruppe einer Anzahl Subkanalbitblöcke einer vorbestimmter Länge aufweist, anfangend an betreffenden vorbestimmten Bitstellen in dem Kanalbitblock, wobei jeder Subkanalbitblock erste Codewörter eines betreffenden Übetragungsblocks und zweite Codewörter von Übertragungsblöcken aufweist;
dadurch gekennzeichnet, dass jedes Subkanalbit einen Hauptblock aufweist mit einer Länge, die kleiner ist als die Länge des genannten Subkanalbitblocks, in dem die ersten Codewörter eines betreffenden Übertragungsbitblocks untergebracht werden, und einen restlichen Teil, wobei die aufeinanderfolgenden Bitstellen der restlichen Teile des Kanalbitblocks mit aufeinanderfolgenden Bits der Hilfsblöcke der genanten Gruppe gefüllt ist.

9. Videorecorder mit einer Aufzeichnungseinheit zum Aufzeichnen eines digitalen Bildsignals auf einem Aufzeichnungsmedium und mit einer Wiedergabeeinheit zum Wiedergeben des aufgezeichneten Bildsignals, dadurch gekennzeichnet, dass die Aufzeichnungseinheit eine Sendestelle nach einem der Ansprüche 1 - 5 aufweist zum Aufzeichnen des Bildsignals auf dem Aufzeichnungsmedium in Form der Kanalblöcke und wobei die Wiedergabeeinheit eine Empfangsstelle nach Anspruch 7 aufweist zum Empfangen der aufgezeichneten Kanalblöcke und zum Wiedergeben des Bildsignals.

## Revendications

1. Poste émetteur pour transmettre des images en une forme numérique à un poste récepteur, comportant:
des moyens de codage pour coder lesdites images en des séries de blocs de bits de transmission de longueur variable chacun comprenant des premiers mots de code les plus importants et des deuxièmes mots de code moins importants;
des moyens de formatage pour assujettir un groupe d'un nombre prédéterminé de blocs de bits de transmission successifs à une opération de formatage de manière à composer un bloc de bits de canal comprenant le même nombre prédéterminé de blocs de bits de sous-canal chacun présentant une longueur prédéterminée et chacun commençant dans une position de bit prédéterminée dans le bloc de bits de canal, les moyens de formatage étant agencés de manière à incorporer les premiers mots de code de blocs de bits de transmission dans les premières positions de bits des propres blocs de bits de sous-canal et à étaler des deuxièmes mots de code qui ne s'ajustent pas dans le propre bloc de bits de sous-canal sur des positions de bits qui restent d'autres blocs de bits de sous-canal;
caractérisé en ce que les moyens de formatage sont encore agencés de manière à:
- diviser des blocs de bits de transmission ayant une longueur supérieure à une longueur prédéterminée qui est inférieure à la longueur du bloc de bits de sous-canal en des blocs principaux ayant ladite longueur prédéterminée et comprenant les premiers mots de code, et en des blocs auxiliaires comprenant les deuxièmes mots de code;
- incorporer chaque bloc principal dans les premières positions de bits du propre bloc de bits de sous-canal; et
- incorporer des bits successifs des blocs auxiliaires dudit groupe dans des positions de bits successives qui restent du bloc de bits de canal.

2. Poste émetteur selon la revendication 1 où le moyen de codage est une transformation bidimensionnelle en avant pour obtenir pour chaque bloc de transmission un coefficient dc et une pluralité de coefficients ac, caractérisé en ce que les premiers mots de code du bloc de bits de transmission renferment le coefficient dc et les coefficients ac les plus élevés.

3. Poste émetteur selon la revendication 1, caractérisé en ce que chaque bloc principal comprend tous les bits du bloc de bits de transmission correspondant jusqu'à un nombre maximal prédéterminé (Q).

4. Poste émetteur selon la revendication 1, caractérisé en ce que chaque bloc principal comprend tous les mots de code du bloc de bits de transmission correspondant jusqu'à un nombre maximal prédéterminé.

5. Poste émetteur selon la revendication 1, caractérisé en ce que chaque bloc principal comprend une telle pluralité de mots de code sélectionnés à partir du bloc de bits de transmission correspondant que le nombre total de bits de ce bloc principal se situe dans une gamme prédéterminée.

6. Procédé pour transmettre des images en une forme numérique, comprenant les étapes suivantes:
le codage desdites images en des séries de blocs de bits de transmission de longueur variable chacun comprenant des premiers mots de code les plus importants et des deuxièmes mots de code moins importants;
le formatage d'un groupe d'un nombre prédéterminé de blocs de bits de transmission successifs en un bloc de bits de canal comprenant le même nombre prédéterminé de blocs de bits de sous-canal chacun ayant une longueur prédéterminée et chacun commençant dans une position de bit prédéterminée dans le bloc de bits de canal, de ce fait incorporant les premiers mots de code de blocs de bits de transmission dans les premières positions de bits des propres blocs de bits de sous-canal et étalant des deuxièmes mots de code qui ne s'ajustent pas dans le propre bloc de bits de sous-canal sur des positions de bits qui restent d'autres blocs de bits de sous-canal;
caractérisé en ce que l'étape de formatage comprend encore les étapes suivantes:
- la division de blocs de bits de transmission ayant une longueur supérieure à une longueur prédéterminée qui est inférieure à la longueur du bloc de bits de sous-canal en des blocs principaux ayant ladite longueur prédéterminée et comprenant les premiers mots de code, et en des blocs auxiliaires comprenant les deuxièmes mots de code;
- l'incorporation de chaque bloc principal dans les premières positions de bits du propre bloc de bits de sous-canal; et
- l'incorporation de bits successifs des blocs auxiliaires dudit groupe dans des positions de bits successives qui restent du bloc de bits de canal.

7. Poste émetteur pour recevoir un signal d'image codé en des séries de blocs de bits de transmission de longueur variable chacun comprenant un nombre de premiers mots de code les plus importants et un nombre de deuxièmes mots de code moins importants, comportant:
des moyens pour recevoir le signal d'image en forme de blocs de bits de canal de longueur fixe, chaque bloc de bits de canal comprenant un certain nombre de blocs de bits de sous-canal de longueurs prédéterminées commençant dans une position de bit prédéterminée dans le bloc de bits de canal, un bloc de bits de sous-canal comprenant des premiers mots de code d'un bloc de transmission correspondant et des deuxièmes mots de code d'autres blocs de transmission;
des moyens de déformatage pour convertir les blocs de bits de sous-canal d'un bloc de canal en blocs de bits de transmission correspondants;
caractérisé en ce que les moyens de déformatage sont agencés de manière à:
- diviser chaque bloc de bits de sous-canal en un bloc principal ayant une longueur inférieure à la longueur dudit bloc de bits de sous-canal, ledit bloc principal comprenant les premiers mots de code du bloc de bits de transmission correspondant, et une partie qui reste;
- former des blocs auxiliaires à partir de bits successifs dans des positions de bits successives de toutes les parties qui restent du bloc de bits de canal, lesdits blocs auxiliaires comprenant les deuxièmes mots de code desdits blocs de transmission; et
- insérer chaque bloc auxiliaire d'un bloc de transmission immédiatement derrière le bloc principal du bloc de transmission correspondant.

8. Signal d'image représentant une série de blocs de bits de transmission de longueur variable chacun comprenant un certain nombre de premiers mots de code les plus importants et un certain nombre de deuxièmes mots de code moins importants, comprenant:
des blocs de bits de canal de longueur fixe, chaque bloc de bits de canal comprenant un groupe d'un nombre de blocs de bits de sous-canal de longueurs prédéterminées commençant dans des propres positions de bits dans le bloc de bits de canal, chaque bloc de bits de sous-canal comprenant des premiers mots de code d'un bloc de transmission correspondant et des deuxièmes mots de code de blocs de transmission;
caractérisé en ce que chaque bit de sous-canal comprend un bloc principal ayant une longueur inférieure à la longueur dudit bloc de bits de sous-canal où sont incorporés les premiers mots de code d'un bloc de bits de transmission correspondant, et une partie qui reste, dans les positions de bits successives des parties qui restent du bloc de bits de canal étant rempli de bits successifs des blocs auxiliaires dudit groupe.

9. Magnétoscope comportant une unité d'enregistrement pour enregistrer un signal d'image numérique sur un milieu de stockage et une unité de reproduction pour reproduire le signal d'image enregistré, caractérisé en ce que l'unité d'enregistrement renferme un poste émetteur selon l'une quelconque des revendications précédentes 1 à 5 pour enregistrer le signal d'image sur le milieu de stockage en forme de blocs de canal, et en ce que l'unité de reproduction renferme un poste récepteur selon la revendication 7 pour recevoir les blocs de canal enregistrés et pour reproduire le signal d'image.
